**Europäisches Patentamt**

**European Patent Office**

**Office européen des brevets**

(19)

(11) Numéro de publication: **0 161 389 B1**

(12)

# FASCICULE DE BREVET EUROPEEN

(45) Date de publication du fascicule du brevet:
08.02.89

(51) Int. Cl.⁴: **H 01 B 9/00, H 01 B 13/14, B 29 C 47/04**

(21) Numéro de dépôt: **85101277.3**

(22) Date de dépôt: **07.02.85**

(54) Câble électrique pour le transport de très fortes intensités sous de faibles tensions et procédés de fabrication d'un tel câble.

(30) Priorité: 10.02.84 FR 8402099
15.11.84 FR 8417425

(43) Date de publication de la demande:
21.11.85 Bulletin 85/47

(45) Mention de la délivrance du brevet:
08.02.89 Bulletin 89/6

(84) Etats contractants désignés:
AT BE CH DE FR GB IT LI NL SE

(56) Documents cités:
DE-B- 1 099 608
GB-A- 784 036

(73) Titulaire: **LES CABLES DE LYON Société anonyme dite:,
170 quai de Clichy, F-92111 Clichy Cedex (FR)**

(72) Inventeur: **Alloin, Michel, Lot. Balloffy Saint Bernard,
F-01600 Trevoux (FR)**
Inventeur: **Flamand, Charles, 5ter Chemin de la
Chauderaie, F-69340 Francheville (FR)**

(74) Mandataire: **Weinmiller, Jürgen et al,
Lennéstrasse 9 Postfach 24, D-8133 Feldafing (DE)**

## Description

La présente invention concerne un câble électrique pour le transport de fortes intensités sous de faibles tensions, notamment un câble de soudage, comportant une gaine extérieure assurant une circulation d'eau à l'intérieur du câble, au moins un conducteur multibrins recouvert par une enveloppe ajourée constituant des canaux de circulation permettant la circulation de l'eau au niveau du conducteur multibrins.

Elle concerne également un procédé de fabrication d'un tel câble.

On connaît, notamment par le document GB-A-784 036, un tel câble de soudage comportant une enveloppe ajourée, cette enveloppe étant constituée d'une bande enroulée de manière hélicoïdale et recouverte d'une tresse. La bande et la tresse sont serrées sur le conducteur multibrins seulement aux extrémités du câble, mais pas le long de celui-ci de sorte qu'il apparaît, au fur et à mesure de l'utilisation de ces câbles, une abrasion des brins élémentaires, due aux vibrations électrodynamiques et aux efforts mécaniques, qui provoquent une obstruction des canaux de refroidissement.

La présente invention a pour but d'augmenter de façon notable la durée de vie des câbles en réduisant les ruptures de brins élémentaires par une meilleure protection du ou des conducteurs à l'aide d'une enveloppe ajourée constituée de deux couches solidaires l'une de l'autre tout le long du câble.

Le câble de la présente invention est caractérisé en ce que l'enveloppe ajourée est constituée de deux couches solidaires l'une de l'autre, chaque couche étant constituée d'au moins une bande.

Selon un premier mode de réalisation, une couche est constituée d'au moins une bande hélicoïdale et l'autre couche est constituée d'au moins une couche longitudinale.

Selon un autre mode de réalisation, les deux couches sont constituées de bandes hélicoïdales.

La présente invention a également pour objet un premier procédé de fabrication d'un tel câble, consistant à recouvrir au moins un conducteur multibrins d'une gaine extérieure permettant une circulation d'eau, caractérisé en ce que, avant la pose de la gaine autour du ou des conducteurs, on introduit séparément un conducteur au centre d'une extrudeuse, on extrude sur ce conducteur deux couches, chaque couche en forme d'au moins une bande, de matière solidaires l'une de l'autre, une couche intérieure à l'aide d'un poinçon et une couche extérieure à l'aide d'une filière.

Avantageusement, on réalise une couche à l'aide d'un poinçon tournant ou d'une filière tournante et une couche longitudinale à l'aide d'un poinçon ou d'une filière fixe.

La présente invention a également pour objet un second procédé de fabrication consistant à recouvrir au moins un conducteur multibrins d'une gaine extérieure permettant une circulation d'eau, caractérisé en ce que, avant la pose de la gaine autour du ou des conducteurs, on enroule hélicoïdalement une première couche de jonc autour du conducteur, on introduit le conducteur dans un dispositif d'imprégration ou de collage à chaud, et on pose une deuxième couche de jonc, chaque couche en forme d'au moins une bande, rendue solidaire de la première.

Avantageusement, on réalise la première couche à l'aide d'au moins un dévidoir monté sur un plateau tournant, on réalise la deuxième couche à l'aide d'au moins un dévidoir et d'une filière, fixes ou tournants.

Il est décrit ci-après à titre d'exemple et en référence aux dessins annexés, deux câbles électriques conformes à l'invention, ainsi qu'un premier et un second dispositifs de fabrication permettant, respectivement, la mise en œuvre du premier et du second procédés de fabrication.

La figure 1 représente un câble électrique selon l'invention, comportant un seul conducteur multibrins.

La figure 2 représente un câble électrique selon l'invention comportant trois conducteurs multibrins.

La figure 3 représente un premier dispositif permettant la mise en œuvre du premier procédé.

Les figures 4, 5 et 6, 7 montrent des détails du dispositif de la figure 3.

La figure 8 représente un deuxième dispositif permettant la mise en œuvre du second procédé.

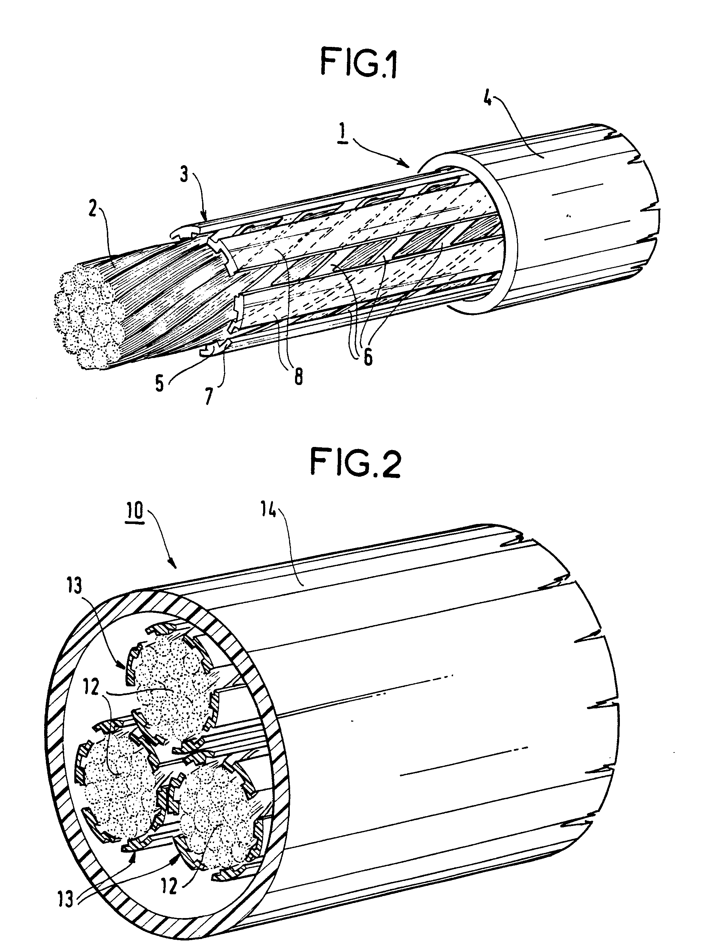

Dans la figure 1, il est représenté un câble 1 comportant un seul conducteur multibrins 2, une enveloppe ajourée 3 et une gaine externe 4. L'enveloppe 3 comprend deux couches distinctes mais néanmoins solidaires l'une de l'autre, une couche intérieure 5 en contact avec le conducteur 2, une couche extérieure 7 en contact ou non avec la gaine externe 4.

La couche intérieure 5 est constituée de plusieurs bandes hélicoïdales 6 et la couche extérieure 7 est constituée de plusieurs bandes longitudinales 8. Les bandes 6 sont entre-elles non-jointives, ainsi d'ailleurs que les bandes 8, pour constituer une enveloppe 3 ajourée permettant la circulation de l'eau le long du câble 1. L'eau est alors en contact avec le conducteur 2.

Dans la figure 2, il est représenté un câble 10 comportant trois conducteurs multibrins 12, chaque conducteur étant recouvert par une enveloppe ajourée 13, identique à l'enveloppe 3 de la figure 1. Ces trois conducteurs munis d'une enveloppe sont placés dans une gaine externe 14 étanche et parcourue par de l'eau. Cette gaine peut, bien entendu, ne recevoir que deux conducteurs multibrins, ou quatre et plus.

L'enveloppe 3, 13 assure une isolation électrique très faible tension et une protection mécanique des brins élémentaires.

L'enveloppe isolante peut, bien entendu, comporter une couche extérieure 7 constituée de bandes hélicoïdales de sens opposé aux bandes hélicoïdales de la couche intérieure 5, ou la couche intérieure 5 peut être constituée de bandes longitudinales et la couche extérieure 7 de bandes hélicoïdales.

Le nombre de bandes pour chaque couche est bien sûr un nombre quelconque.

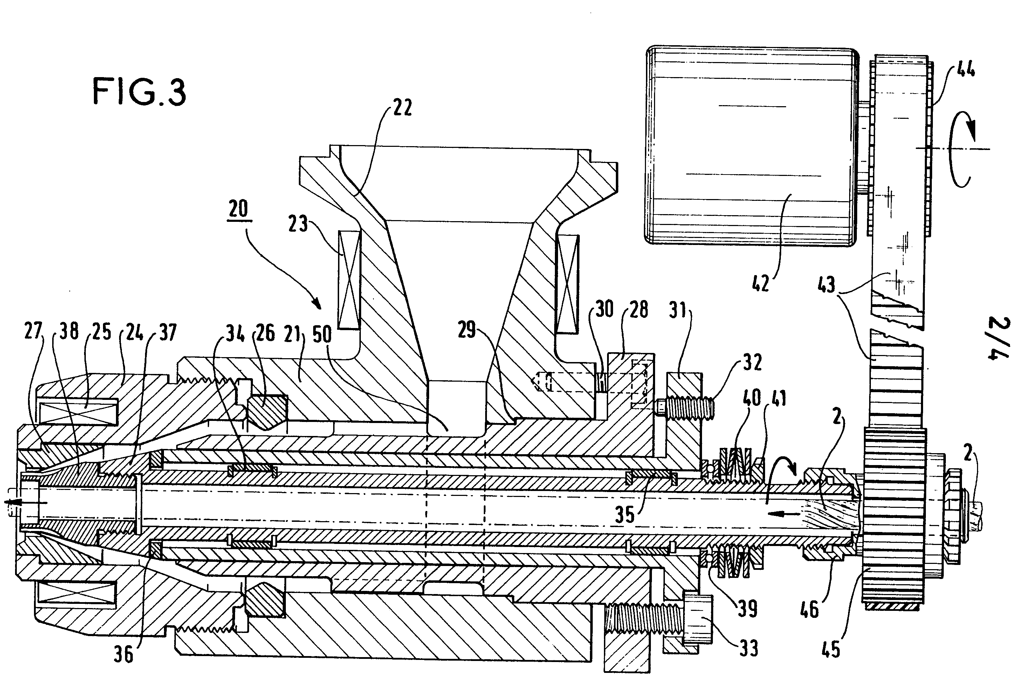

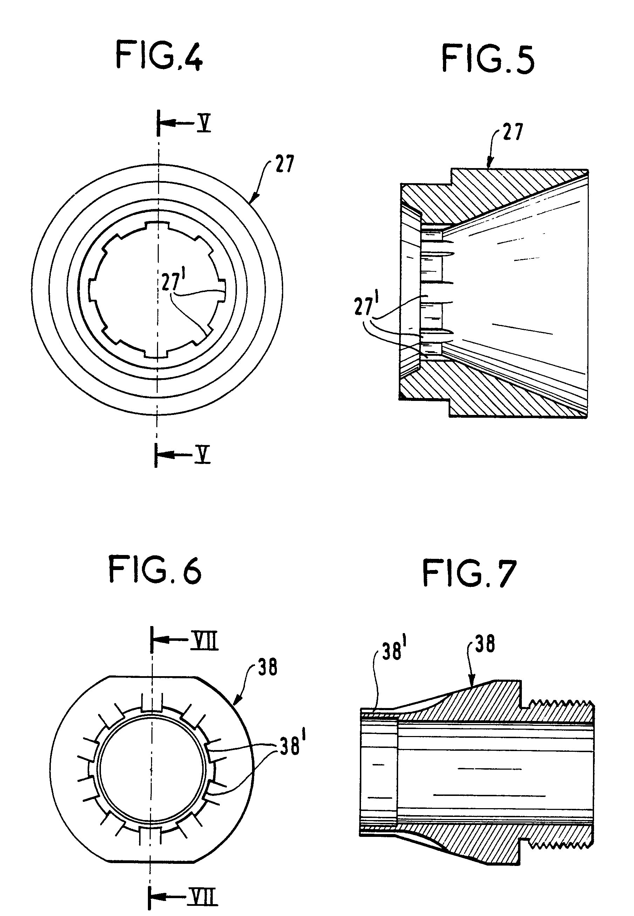

Dans la figure 3, il est représenté une extrudeuse 20, comportant un corps central 21 muni d'un entonnoir de remplisage 22 de matière thermoplastique ou élastomère. Une résistance chauffante 23, ceinturant l'entonnoir 22, permet de maintenir la matière à sa température de fusion. Ce corps central 21 comprend également une tête 24 vissée à une extrémité de celui-ci et munie d'une autre résistance chauffante 25. En se vissant la tête prend appui sur une cale 26. Cette tête comporte une filière fixe 27 qui sera décrite ci-après à l'aide des figures 4 et 5.

Une pièce cylindrique 28 est maintenue en appui sur un épaulement 29 du corps central 21, et cette pièce 28 est fixée par trois vis 30 réparties circonférentiellement à 120° (une seule vis est représentée).

Dans cette pièce 28 est introduite une douille 31 réglable longitudinalement aux moyens de plusieurs vis 32 réparties circonférentiellement et bloquée aux moyens de trois vis 33 réparties également à 120° (une seule vis étant représentée).

Cette douille 31 supporte deux paliers 34, 35 et une butée fixe 36. Un arbre creux 37, dans lequel est vissé un poinçon 38, tourne sur les deux paliers 34, 35 et est en appui côté poinçon sur la butée fixe 36 et de l'autre côté sur une butée à billes 39 par l'intermédiaire de rondelles «Belleville» 40 et d'un écrou 41. Cet arbre est entraîné en rotation par un moteur 42 par l'intermédiaire d'une poulie crantée 43 accouplant un pignon 44 du moteur 42 et un pignon 45 relié à l'arbre 37 par une douille filetée 46. Ce dispositif comporte donc un circuit d'amenée de la matière constituée par l'entonnoir 22, une saignée circulaire et des canaux 50 répartis circonférentiellement entre le corps 21 et la pièce 28 depuis la saignée jusqu'au niveau de l'ensemble filière-poinçon.

Les figures 4 et 5 montrent la filière fixe 27 de manière plus détaillée. Cette filière comporte des cannelures 27', et à chaque cannelure 27' correspond une bande longitudinale 8 de la couche extérieure 7 de chaque enveloppe 3 ou 13.

Les figures 6 et 7 montrent le poinçon tournant 38 de manière plus détaillée. Ce poinçon comporte des cannelures 38', et à chaque cannelure 38' correspond une bande hélicoïdale 6 de la couche intérieure 5 de chaque enveloppe 3 ou 13.

Une opération d'extrusion s'effectue de la manière suivante: Un conducteur multibrins 2 ou 12 est introduit dans l'arbre creux 37 et traverse le poinçon 38. Ce poinçon et cet arbre sont mis en rotation au moyen du moteur 42. La matière thermoplastique ou élastomère est introduite dans l'entonnoir 22 et elle suit les canaux 50 puis passe entre la filière et le poinçon pour recouvrir le conducteur 2 ou 12 et constituer une enveloppe ajourée 3 ou 13.

En tournant, le poinçon réalise les bandes hélicoïdales 6 de la couche intérieure 5 et la filière fixe réalise les bandes longitudinales 8 de la couche extérieure 7. Ces deux couches 5 et 7 sont bien entendu solidaires car la matière est encore en fusion au niveau de la filière et du poinçon.

Cette extrudeuse peut comporter une filière tournante entraînée par des moyens connus pour constituer une couche extérieure comportant des bandes hélicoïdales.

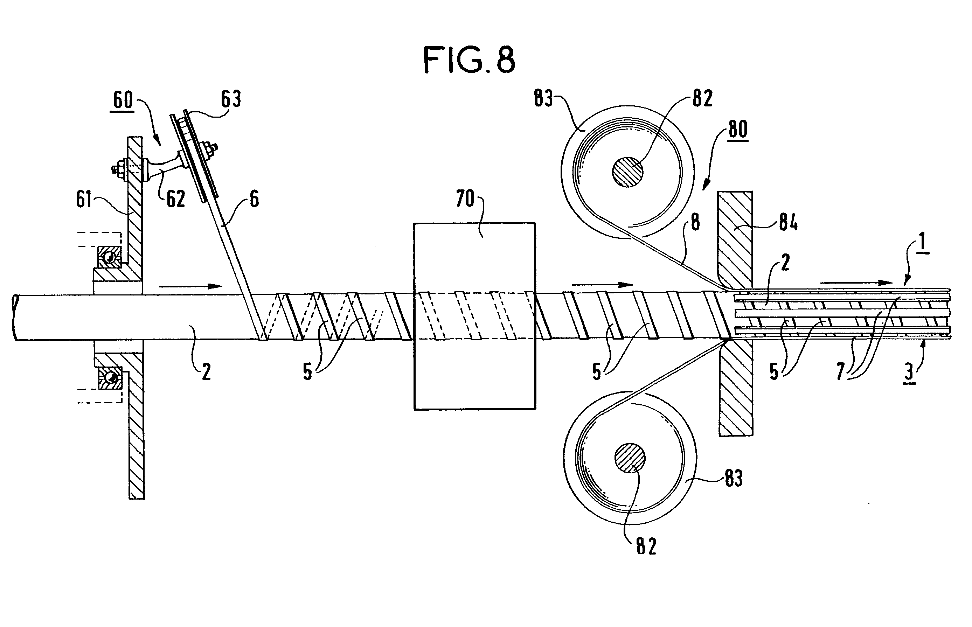

Dans la figure 8, il est représenté un dispositif 60 de fabrication de la première couche 5 de jonc, un dispositif 70 d'imprégnation ou de collage à chaud, et un dispositif de fabrication 80 de la deuxième couche 7 de jonc.

Le dispositif de fabrication 60 est constitué par un plateau tournant 61 qui porte à sa périphérie un dévidoir 62 incliné pour permettre un enroulement hélicoïdal. Ce dévidoir 62 supporte une bobine 63 sur laquelle est enroulé un jonc 6. La rotation du plateau 61 et le déplacement longitudinal du conducteur 2 enroule le jonc 6 sur le conducteur 2 de manière hélicoïdale mais pas bord à bord pour permettre la circulation de l'eau. Ce jonc 6 constitue la première couche 5. Bien entendu il est très facile de disposer plusieurs dévidoirs sur le plateau pour poser plusieurs joncs 6 constituant la première couche 5.

Le conducteur 2 muni de sa couche 5 traverse le dispositif 70 qui peut être un dispositif utilisant par exemple, un hot melt ou une colle ou la fusion superficielle tel qu'un four ou une étuve.

Le dispositif de fabrication 80 de la deuxième couche 7 de jonc comporte dans ce cas huit dévidoirs 82 dont deux seulement ont été représentés et une filière 84. Chaque dévidoir porte une bobine 83 sur laquelle est enroulé un jonc 8. Cette figure montre un dispositif fixe 80 qui permet de poser les joncs 8 longitudinalement pour constituer la couche 7.

Bien entendu, le dispositif 80 peut être monté sur un plateau tournant permettant de poser la couche 7 hélicoïdalement.

Les deux couches 5 et 7 constituent la gaine ajourée 3.

Une opération de pose se passe de la manière suivante:

– On tire le conducteur 2 selon son axe, on enroule la première couche 5 à l'aide du plateau tournant 61, on fait passer le conducteur 2 recouvert de la couche 5 à travers le dispositif 70 puis on pose la deuxième couche 7, longitudinalement ou hélicoïdalement. Pour terminer la fabrication du câble, il suffit alors de poser la gaine extérieure.

## Revendications

1. Câble électrique (1, 10) pour le transport de très fortes intensités sous de faibles tensions, comportant une gaine extérieure (4, 14) assurant une circulation d'eau à l'intérieur du câble, au moins un conducteur multibrins (2, 12) recouvert par une enveloppe ajourée (3, 13) constituant des canaux de refroidissement permettant la circulation de l'eau au niveau du conducteur multibrins, caractérisé en ce que l'enveloppe ajourée est constituée de deux couches (5, 7) solidaires l'une de l'autre, chaque couche (5, 7) étant constituée d'au moins une bande (6, 8).

2. Câble électrique selon la revendication 1, caractérisé en ce qu'une couche (5) est constituée d'au moins une bande hélicoïdale (6) et l'autre couche (7) est constituée d'au moins une bande longitudinale (8).

3. Câble électrique selon la revendication 1, caractérisé en ce que les deux couches sont constituées de bandes hélicoïdales.

4. Procédé de fabrication d'un câble électrique selon au moins l'une des revendications 1 à 3, consistant à recouvrir au moins un conducteur multibrins (2) d'une gaine extérieure (4) permettant une circulation d'eau, caractérisé en ce que, avant la pose de la gaine autour du ou des conducteurs, on introduit séparément un conducteur (2) au centre d'une extrudeuse (20), on extrude sur ce conducteur deux couches, chaque couche en forme d'au moins une bande de matière solidaires l'une de l'autre, une couche intérieure à l'aide d'un poinçon et une couche extérieure à l'aide d'une filière.

5. Procédé de fabrication selon la revendication 4, caractérisé en ce que l'on réalise une couche hélicoïdale à l'aide d'un poinçon tournant ou d'une filière tournante et une couche longitudinale à l'aide d'un poinçon ou d'une filière fixe.

6. Procédé de fabrication d'un câble électrique selon au moins l'une des revendications 1 à 3, consistant à recouvrir au moins un conducteur multibrins (2) d'une gaine extérieure permettant une circulation d'eau, caractérisé en ce que, avant la pose de la gaine extérieure autour du ou des conducteurs, on enroule hélicoïdalement une première couche (5) de jonc (6) autour du conducteur (2), on introduit le conducteur dans un dispositif (70) d'imprégnation ou de collage à chaud et on pose une deuxième couche (7) de jonc (8) chaque couche en forme d'au moins une bande, rendue solidaire de la première.

7. Procédé de fabrication selon la revendication 6, caractérisé en ce que l'on réalise la première couche (5) à l'aide d'au moins un dévidoir (62) monté sur un plateau tournant (61).

8. Procédé de fabrication selon la revendication 7, caractérisé en ce que l'on réalise la deuxième couche (7) à l'aide d'au moins un dévidoir et d'une filière.

9. Procédé de fabrication selon la revendication 8, caractérisé en ce que l'on réalise une deuxième couche longitudinale à l'aide d'un ou de dévidoirs fixes (82) et d'une filière fixe (84).

10. Procédé de fabrication selon la revendication 8, caractérisé en ce que l'on réalise une deuxième couche hélicoïdale à l'aide d'un ou de dévidoirs tournants et d'une filière tournante.

**Patentansprüche**

1. Elektrisches Kabel (1, 10) zum Transport starker Ströme bei niedrigen Spannungen, mit einem äusseren Mantel (4, 14), durch den eine Wasserzirkulation im Inneren des Kabels bewirkt wird, und mit mindestens einem mehradrigen Leiter (2, 12), der von einer durchbrochenen Hülle (3, 13) umhüllt ist, welche Durchflusskanäle zur Zirkulation des Wassers im Bereich des mehradrigen Leiters bildet, dadurch gekennzeichnet, dass die durchbrochene Hülle aus zwei miteinander fest verbundenen Schichten (5, 7) besteht und jede Schicht (5, 7) aus mindestens einem Band (6, 8) besteht.

2. Elektrisches Kabel nach Anspruch 1, dadurch gekennzeichnet, dass eine Schicht (5) aus mindestens einem schraubenförmigen Band (6) und die andere Schicht (7) aus mindestens einem Längsband (8) besteht.

3. Elektrisches Kabel nach Anspruch 1, dadurch gekennzeichnet, dass beide Schichten aus schraubenförmigen Bändern aufgebaut sind.

4. Verfahren zur Herstellung eines elektrischen Kabels nach mindestens einem der Ansprüche 1 bis 3, das darin besteht, mindestens einen mehradrigen Leiter (2) mit einer äusseren Hülle (4) zu versehen, die eine Wasserzirkulation erlaubt, dadurch gekennzeichnet, dass vor der Anbringung der Hülle um den oder die Leiter getrennt ein Leiter (2) in der Mitte eines Extruders (20) angeordnet wird, dass um den Leiter zwei Schichten jeweils in Gestalt eines Bandes aus fest miteinander verbundenem Material extrudiert werden, die innere Schicht mit Hilfe eines Dornes und die äussere Schicht mit Hilfe einer Ziehdüse.

5. Herstellungsverfahren nach Anspruch 4, dadurch gekennzeichnet, dass eine Schicht mit Hilfe eines rotierenden Dorns oder einer rotierenden Ziehdüse und eine Längsschicht mit Hilfe eines feststehenden Dorns oder einer feststehenden Ziehdüse erzeugt wird.

6. Verfahren zur Herstellung eines elektrischen Kabels nach mindestens einem der Ansprüche 1 bis 3, das darin besteht, mindestens einen mehradrigen Leiter (2) mit einer äusseren Hülle (4) zu versehen, die eine Wasserzirkulation erlaubt, dadurch gekennzeichnet, dass vor der Anbringung der Hülle um den oder die Leiter eine erste Schicht (5) aus Leisten (6) schraubenförmig um den Leiter (2) gewickelt wird, der Leiter in eine Vorrichtung (70) zur Imprägnierung oder Warmverklebung eingeführt wird, und eine zweite Schicht (7) aus Leisten (8) aufgebracht und mit der ersten fest verbunden wird, wobei jede Schicht aus mindestens einem Band geformt ist.

7. Herstellungsverfahren nach Anspruch 6, dadurch gekennzeichnet, dass die erste Schicht (5) mit Hilfe mindestens einer Abrollspule (62) erzeugt wird, die auf einer Drehscheibe (61) montiert ist.

8. Herstellungsverfahren nach Anspruch 7, dadurch gekennzeichnet, dass die zweite Schicht (7) mit Hilfe einer Abrollspule und einer Ziehdüse erzeugt wird.

9. Herstellungsverfahren nach Anspruch 8, dadurch gekennzeichnet, dass die zweite Längsschicht mit Hilfe einer oder mehrerer feststehenden Abrollspulen (82) und einer feststehenden Ziehdüse (84) erzeugt wird.

10. Herstellungsverfahren nach Anspruch 8, dadurch gekennzeichnet, dass die zweite schraubenförmige Schicht mit Hilfe einer oder mehrerer umlaufender Abrollspulen und einer umlaufenden Ziehdüse erzeugt wird.

## Claims

1. An electric cable (1, 10) for transmitting high current at low voltage, in particular a welding cable, comprising an outer sheath (4, 14) adapted to ensure a circulation of water within the cable, at least one multi-strand conductor (2, 12) covered by a perforated envelope (3, 13) constituting circulation channels for the circulation of water around the multi-strand conductor, characterized in that the perforated envelope is constituted of two layers (5, 7) integral with one another, each layer (5, 7) being composed of at least one strip (6, 8).

2. An electric cable according to claim 1, characterized in that one layer (5) consists of at least one helical strip (6) and the other layer (7) consists of at least one longitudinal strip (8).

3. An electric cable according to claim 1, characterized in that both layers consist of helical strips.

4. A method of manufacturing an electric cable according to at least one of claims 1 to 3, consisting in covering at least one multi-strand conductor (2) with an outer sheath (4) enabling water circulation, characterized in that, prior to placing the sheath around the conductor(s), the or each conductor (2) is separately inserted into the centre of an extruder (20), and two layers of material, each being formed of at least one strip and which are integral with each other are extruded onto the conductor, an inner one of the layers being extruded by means of a mandrel, and an outer one of the layers by means of a die.

5. A manufacturing method according to claim 4, characterized in that a helical layer is made by means of a rotating mandrel or die, and a longitudinal layer is made by means of a stationary mandrel or die.

6. A method of manufacturing an electric cable according to at least one of claims 1 to 3, consisting in covering at least one multi-strand conductor (2) with an outer sheath enabling water circulation, characterized in that, prior to the sheath being placed around the conductor(s), a first tape layer (5) is wound helically around the conductor (2), the conductor is inserted in a device (70) for impregnating or for hot gluing, and a second tape layer (7), each layer being formed of at least one strip, is placed thereon and made integral with the first layer.

7. A manufacturing method according to claim 6, characterized in that the first layer (5) is made by means of at least one spooler (62) mounted on a rotary plate (61).

8. A manufacturing method according to claim 7, characterized in that the second layer (7) is made by means of at least one spooler and a die.

9. A manufacturing method according to claim 8, characterized in that a second longitudinal layer is made by means of at least one stationary spooler (82) and a stationary die (84).

10. A manufacturing method according to claim 8, characterized in that a second helical layer is made by means of at least one rotary spooler and a rotary die.

# FIG.1

# FIG.2

FIG.3

# FIG.4

27

27'

# FIG.5

27

27'

# FIG.6

38

38'

# FIG.7

38'

38

FIG.8